# EUROPÄISCHE PATENTSCHRIFT

(11) **EP 1 644 620 B1**
(45) Veröffentlichungstag und Bekanntmachung des Hinweises auf die Patenterteilung: **10.10.2007**
(21) Anmeldenummer: 04739721.1
(22) Anmeldetag: 09.06.2004
(51) Int. Cl.: F01N 3/28, B01J 35/04, B23K 1/00

(54) **VERFAHREN ZUR HERSTELLUNG EINER METALLISCHEN WABENSTRUKTUR**
METHOD FOR PRODUCING A METAL HONEYCOMB STRUCTURE
PROCEDE DE FABRICATION D'UNE STRUCTURE EN NID D'ABEILLES METALLIQUE

(30) Priorität: 27.06.2003 DE 10329002
(43) Veröffentlichungstag der Anmeldung: 12.04.2006
(73) Patentinhaber: Emitec Gesellschaft für Emissionstechnologie mbH, 53797 Lohmar (DE)
(72) Erfinder: VOIT, Michael, 51375 Leverkusen (DE); PETERS, Jürgen, 53757 St. Augustin (DE); KURTH, Ferdi, 53894 Mechernich (DE); WIERES, Ludwig, 51491 Overath (DE)
(74) Vertreter: Kahlhöfer, Hermann
(86) Internationale Anmeldenummer: PCT/EP2004/006203
(87) Internationale Veröffentlichungsnummer: WO 2005/001251

(56) Entgegenhaltungen:
- EP-A- 0 460 611
- DE-A- 4 025 434
- US-A- 4 619 912
- US-A- 5 785 931
- US-A1- 2001 015 087
- US-B1- 6 505 396
- PATENT ABSTRACTS OF JAPAN vol. 012, no. 344 (C-528), 16. September 1988 (1988-09-16) & JP 63 104653 A (NIPPON RADIATOR CO LTD), 10. Mai 1988 (1988-05-10)

## Beschreibung

Die Erfindung betrifft Verfahren zur Herstellung einer Wabenstruktur mit einer Vielzahl von im wesentlichen parallel zueinander angeordneten Kanälen, die zumindest eine Lage von zumindest teilweise strukturierten Blechfolien sowie ein Gehäuse umfasst. Derartige Wabenstrukturen werden bevorzugt als Komponente zur Behandlung von Abgasen mobiler Verbrennungskraftmaschinen eingesetzt.

Abgasreinigungskomponenten in Abgasanlagen mobiler Verbrennungskraftmaschinen (wie beispielsweise Otto- oder Dieselmotoren) in Kraftfahrzeugen, Rasenmähern, Motorsägen, Motorrädern, etc., haben im allgemeinen die Aufgabe, im Abgas enthaltene Schadstoffe umzusetzen oder (zumindest für einen gewissen Zeitraum) zu speichern. Als solche Abgaskomponenten sind beispielsweise katalytische Konverter, Filter, Adsorber, oder Abscheider bekannt. Die Wabenstruktur stellt dabei eine sehr große Oberfläche bereit, welche mit dem vorbeiströmenden bzw. hindurchtrömenden Abgas in Kontakt treten Kann. Der daraus resultierende, innige Kontakt mit dem Abgas hat eine hohe Effizienz der Abgasreinigungskomponente zur Folge.

Grundsätzlich sind derartige Wabenstrukturen aus keramischen oder metallischen Materialien bekannt. Zur Herstellung solcher Wabenkörper sind dem Fachmann eine Vielzahl unterschiedlicher Fertigungsverfahren bekannt, insbesondere das Extrudieren oder auch das fügetechnische Verbinden von Teilkomponenten wie. Bleche, Faserlagen, Gitterstrukturen oder ähnliches. Aufgrund der Tatsache, dass derartige Abgasreinigungskomponenten stets auf die Anforderungen (z.B. bezüglich der Art bzw. der Ausgestaltung) der Verbrennungskraftmaschine abgestimmt werden, ist es wünschenswert, dass eine Vielzahl verschiedener Varianten solcher Wabenstrukturen in einfachen Fertigungsprozessen herzustellen sind. Dabei hat sich in der Vergangenheit gezeigt, dass metallische Wabenkörper, die beispielsweise aus zumindest teilweise strukturierten Blechfolien aufgebant sind, mit einer deutlich höheren Variationsvielfalt zu realisieren sind, ohne über die Maßen aufwendige Abänderungen des Fertigungsprozesses vorzunehmen.

Im Hinblick auf solche metallische Wabenstrukturen sind eine Vielzahl von unterschiedlichen Aufbaumöglichkeiten sowie Herstellungsverfahren bekannt. Unterschieden vor allem in zwei typische Bauformen. Eine frühe Bauform, für die die DE 29 02 779 A1 typische Beispiele zeigt, ist die spiralige Bauform, bei der im wesentlichen eine glatte und eine gewellte Blechlage aufeinandergelegt und spiralförmig aufgewickelt werden. Bei einer anderen Bauform wird der Wabenkörper aus einer Vielzahl von abwechselnd angeordneten glatten und gewellten oder unterschiedlich gewellten Blechlagen aufgebaut, wobei die Blechlagen zunächst einen oder mehrere Stapel bilden, die miteinander verschlungen werden. Dabei kommen die Enden aller Blechlagen außen zu liegen und können mit einem Gehäuse oder Mantelrohr verbunden werden, wodurch zahlreiche Verbindungen entstehen, die die Haltbarkeit des Wabenkörpers erhöhen. Typische Beispiele dieser Bauformen sind in der EP 0 245 737 B1 oder der WO 90/03220 beschrieben. Auch seit langem bekannt ist es, die Blechlagen mit zusätzlichen Strukturen auszustatten, um die Strömung zu beeinflussen und/oder eine Quervermischung zwischen den einzelnen Strömungskanälen zu erreichen. Typische Beispiele für solche Ausgestaltungen sind die WO 91/01178, die WO 91/01807 und die WO 90/08249. Schließlich gibt es auch Wabenkörper in konischer Bauform, gegebenenfalls auch mit weiteren zusätzlichen Strukturen zur Strömungsbeeinflussung. Ein solcher Wabenkörper ist beispielsweise in der WO 97/49905 beschrieben. Darüber hinaus ist es auch bekannt, in einem Wabenkörper eine Aussparung für einen Sensor freizulassen, insbesondere zur Unterbringung einer Lambdasonde. Ein Beispiel dafür ist in der DB 8816 154 U1 beschrieben. Zur Herstellung solcher Wabenstrukturen sei insbesondere auch auf folgende Veröffentlichungen hingewiesen: WO 98/34725, WO 97/06358, WO 97/00725, WO 97/00135.

Ein anderer Aufbau für einen Wabenkörper wird in der US 5,785,931 A beschrieben. Zur Bereitstellung eines Wabenkörpers mit einer großen katalytisch einsetzbaren Fläche sowie einer gleichzeitigen Eignung des Wabenkörpers, zumindest einen langen elektrischen Leiter in zumindest einer der Blechlagen integrieren zu können wird vorgeschlagen, dass der Wabenkörper mit langen, umeinander sternartig geschlungenen Blechlagen gebildet ist. Diese gekrümmten Blechlagen bilden dabei abwechselnd einwärts und auswärts verlaufende Schlaufen. Bezüglich des Herstellungsverfahrens wird dort erläutert, dass es vorteilhaft ist, diese Art von Wabenkörpern aus einem Hohlwickel durch sternförmiges Falten und anschließendes Umeinanderschlingen der Sternzacken zu formen.

Im Hinblick auf die zitierten Veröffentlichungen werden regelmäßig strukturierte und glatte Blechfolien abwechselnd aufeinander gestapelt, und anschließend so gewickelt und/oder gewunden, dass sie eine äußere Gestalt haben, die im wesentlichen der Form des Gehäuses entspricht, in das sie nachfolgend eingesetzt werden. Unter Umständen werden diese strukturierten und glatten Blechfolien zu Stapeln beziehungsweise Lagen angeordnet, wobei jeweils die gleiche Anzahl von glatten und strukturierten Blechfolien vorgesehen sind. Die so aneinander liegenden Blechfolien bilden dann auf beiden Seiten jeweils Kanäle, die für das Abgas durchströmbar sind.

Insbesondere bei Wabenstrukturen, die mit relativ kurzen Blechfolien gebildet werden, kann es bei der Ausbildung von fügetechnischen Verbindungen zu technischen Problemen kommen. Weist die Wabenstruktur beispielsweise eine maximale Ausdehnung auf, die kleiner als 30 mm ist (wobei keine spiralige Aufwicklung der Blechfolien vorgenommen wird), kann es vorkommen, dass Kontaktbereiche von strukturierten Blechfolien mit sich selbst bzw. mit anderen strukturierten Blechfolien auftreten. Dieses Problem besteht insbesondere dann, wenn die Lagen S-formig oder in einer ähnlichen Weise geschlungen sind. Das führt dazu, dass die Strukturen ineinander greifen und so zumindest teilweise Kanäle missgebildet werden. Dadurch wird die Gefahr erhöht, dass bei einer nachfolgenden Beschichtung der Wabenstruktur die Kanäle verstopft bzw. zumindest unterschiedliche Beschichtungsdicken generiert werden. Dass kann zur Folge haben, dass beispielsweise der Strömungswiderstand der Wabenstruktur zumindest in Teilbereichen erhöht wird. Daraus können unterschiedliche Temperaturbelastungen, niedrigere Umsatzraten sowie gegebenenfalls eine Reduzierung der Leistung der vorgeschalteten Verbrennungskraftmaschine resultieren. Außerdem besteht die Gefahr, dass im Hinblick auf die Applizierung von Zusatzwerkstoffen zur Ausbildung fügetechnischer Verbindungen, wie beispielsweise Lot, unerreichbare Teilabschnitte gebildet sind. Diese später nicht bzw. nicht vollständig verbundenen Teilbereiche können aufgrund der im Abgassystem herrschenden, extrem hohen thermischen und dynamischen Belastung zur Zerstörung des Bauteils führen.

Hiervon ausgehend ist es Aufgabe der vorliegenden Erfindung, die Probleme der bekannten Wabenstrukturen, besonders der vorstehend genannten, zu beseitigen. So soll ein Verfahren angegeben werden, dass die Herstellung einer Wabenstruktur gerade mit kleinen Ausdehnungen beziehungsweise Abmessungen prozesssicher ermöglicht. Insbesondere ist es dabei eine Aufgabe, eine Wabenstruktur zu schaffen, die einfach aufgebaut ist, und mit geringem fertigungstechnischen Aufwand herstellbar ist. Dabei stehen auch eine gleichmäßige Ausbildung von für das Abgas durchströmbaren Kanälen, eine sichere Anbindung benachbarter Blechfolien miteinander sowie mit dem Gehäuse im Vordergrund.

Diese Aufgaben werden gelöst durch ein Verfahren zur Herstellung einer Wabenstruktur mit den Merkmalen des Patentanspruchs 1. Weitere vorteilhafte Ausgestaltungen sind in den jeweils abhängigen Patentansprüchen beschrieben. Dabei sei darauf hingewiesen, dass die dort im einzelnen beschriebenen Merkmale auch in beliebiger Kombination miteinander zu vorteilhaften Ausgestaltungen führen.

Gemäß der Erfindung wird ein Verfahren zur Herstellung einer Wabenstruktur mit einer Vielzahl von im wesentlichen parallel zueinander angeordneten Kanälen vorgeschlagen, welche mindestens eine Lage von zumindest teilweise strukturierten Blechfolien sowie ein Gehäuse umfasst. Dabei sind zumindest folgende Schritte umfasst:
- Bilden mindestens einer Lage, indem pro Lage wenigstens eine zumindest teilweise strukturierte Blechfolie zwischen zwei äußeren glatten Blechlagen angeordnet wird,
- Winden der mindestens einen Lage,
- Einbringen der mindestens einen, gewundenen Lage in ein Gehäuse, wobei die mindestens eine lage vor dem Trennvorgang in einem Formwerkzeug zum Winden positioniert wird.

Das Bilden der mindestens einen Lage erfolgt dabei bevorzugt in der Weise, dass abwechselnd eine glatte Blechfolie, eine vollständig strukturierte Blechfolie und wiederum eine glatte Blechfolie aufeinander angeordnet werden. Es ist aber auch möglich, dass die beiden äußeren glatten Blechlagen miteinander verbunden sind beziehungsweise ein durchgehendes glattes Blechband vorgesehen wird, das beispielsweise eine U-förmige Hülle darstellt, wobei darin eine strukturierte Blechfolie angeordnet ist Werden mehrere Lagen zum Aufbau der Wabenstruktur verwendet, so wird wiederum auf der äußeren glatten Blechfolie der einen Lage eine äußere glatte Blechfolie der angrenzenden Lage angeordnet, usw. Die mehreren Lagen können einen Stapel bilden, wobei dieser grundsätzlich wieder von glatten Blechfolien begrenzt ist Grundsätzlich wird bezüglich der herstellbaren Wabenstruktur auf die obigen Ausführungen verwiesen, wobei hiermit auch solche mit einer Mehrzahl von Lagen, z. B. mit 2 bis 5 Lagen, hergestellt werden kann.

Unter dem Verfahrensschritt "Winden" wird ein Umbiegen, Umfalzen, Knicken und/oder Aufwickeln der mindestens einen Lage verstanden. Dabei weist die mindestens eine Lage anschließend eine äußere Form bzw. Mantelfläche auf, die im wesentlichen der Gestalt des Gehäuses entspricht. Vorzugsweise weist die gewundene Lage bzw. das gewundene Lagenpaket einen Querschnitt auf, der etwas größer ist, als der Querschnitt, den das Gehäuse einschließt Damit wird eine Vorspannung realisiert, die sicherstellt, dass die Enden der Blechlagen bündig an der Innenfläche des Gehäuses anliegt. Der flächenbezogene Unterschied bzw, die Vorspannung beträgt dabei ungefähr die Größenordnung von 2% bis 5%.

Schließlich wird die so gewundene Lage zumindest teilweise in ein Gehäuse eingebracht. Ein teilweises Einbringen der mindestens einen, gewundenen Lage eröffnet die Möglichkeit, die äußeren, freiliegenden Enden der mindestens einen Lage mit Zusatzwerkstoffen, wie Lotstreifen etc., zu versehen. Anschließend kann die so vorbereitete mindestens eine Lage vollständig in das Gehäuse an die gewünschte Position positioniert werden.

Weiterhin ist gilt, dass die mindestens eine Lage vor dem Trennvorgang in einem Formwerkzeug zum Winden positioniert wird. D.h. mit anderen Worten, dass die Blechlage zunächst in das Formwerkzeug eingeführt und durch dieses fixiert bzw. gehalten wird. Das hat den Vorteil, dass die mindestens eine Lage nach dem Trennvorgang nicht mehr transportiert werden muss, sondern sich bereits in der entsprechenden Position zur Durchfürung des Windungs-Prozesses befindet Dies hat wiederum eine deutliche Zeitersparnis im Hinblick auf die Fertigung sowie auch einen reduzierten Handhabungsaufwand zur Folge.

Die Erfindung eignet sich insbesondere zur Herstellung einer Wabenstruktur mit einer Vielzahl von im wesentlichen parallel zueinander angeordneten Kanälen, die eine Lage von zumindest teilweise strukturierten Blechfolien sowie ein Gehäuse umfasst. Sie ist dadurch gekennzeichnet, dass die Lage ein Anzahl (N) zumindest teilweise strukturierte Blechfolien und einen Anzahl (N+1) glatte Blechfolien umfasst, wobei die Anzahl N = 1, 2 oder 3 ist und zwei äußere glatte Blechfolien vorgesehen sind. D.h. insbesondere mit anderen Worten, dass die eine Lage eine Art Sandwich bildet, wobei die beiden äußeren Blechfolien glatt sind. Unter einer "glatten" Blechfolie sind insbesondere solche Blechfolien zu verstehen, die keine Wellungen, Prägungen, Umfalzungen, usw. aufweisen. Damit ist jedoch nicht gemeint, dass die glatte Blechfolie eine bestimmte (z.B. besonders niedrige) Oberflächenrauhigkeit hat, oder nicht beispielsweise S-förmig oder in einer ähnlichen Weise gewunden ist. Zwischen den beiden äußeren, glatten Blechfolien ist zumindest eine, wenigstens teilweise, "strukturierte" Blechfolie angeordnet.

Es ist grundsätzlich auch möglich, dass eine Mehrzahl von Blechfolien zwischen den zwei äußeren glatten Blechfolien angeordnet sind und die Lage bilden, wobei zumindest eine dieser zusätzlichen Blechfolien zumindest teilweise strukturiert ist. Es ist beispielsweise auch ausführbar, dass zwischen den zwei äußeren glatten Blechfolien ein Stapel mehrerer, abwechseln angeordneter glatter und strukturierter Blechfolien vorgesehen ist. Weiter ist denkbar, dass eine Blechfolie beispielsweise nur zu einem Teil strukturiert ist, gleichfalls aber auch glatte Abschnitte aufweist. Dabei bilden die im Inneren angeordneten (glatten und) strukturierten Blechfolien auf beiden Seiten (also den großflächigen Oberflächen) zumindest teilweise Kanalwände. Im Gegensatz dazu erfolgt die Anordnung der mindestens einen Lage zur Bildung einer Wabenstruktur derart, dass die äußeren glatten Blechfolien nur zur einen Seite hin, nämlich hin zu der innen angeordneten, mindestens einen zumindest teilweise strukturierten Blechfolie Kanäle bilden. Nach außen liegen diese äußeren glatten Blechfolien bevorzugt zumindest teilweise an sich selbst beziehungsweise an benachbarten äußeren glatten Blechfolien beziehungsweise am Gehäuse an. Dabei schmiegen sich diese glatten Blechfolien so aneinander an, dass keine für das Abgas durchströmbare Kanäle gebildet sind.

Durch die Vorsehung zweier äußerer glatter Blechfolien wird sichergestellt, dass eine direkte Kontaktierung von benachbart zueinander angeordneten Abschnitten der strukturierten Blechfolien vermieden wird. Dies führt zur Reduzierung von Fehlstellen hinsichtlich des Aufbaus der Wabenstruktur, so dass eine gleichmäßige Verteilung der Kanäle über den Querschnitt der Wabenstruktur sichergestellt ist. Das direkte Aneinanderliegen der äußeren glatten Blechfolien hat auch zur Folge, dass bei einer thermischen Behandlung der Wabenstruktur, beispielsweise im Rahmen eines Lötverfahrens, fügetechnische Verbindungen zwischen diesen glatten Blechfolien ausgebildet werden. Diese haben ihren Ursprong im wesentlichen in Diffusionsvorgängen, die zu lokalen Diffusionsverschweißungen führen. Somit ist eine dauerhafte Verbindung der Lagen miteinander beziehungsweise der benachbart zueinander angeordneten äußeren glatten Blechfolien gewährleistet.

Dadurch wird auch das Phänomen des "Teleskopierens" vermieden, bei dem sich benachbarte Lagen aufgrund der auftretenden Belastungen im Abgassystem relativ zueinander verschieben. Je nachdem, mit welchem Druck die benachbart zueinander angeordneten äußeren glatten Blechfolien aneinandergepresst werden beziehungsweise in dem Gehäuse vor der thermischen Behandlung eingebracht werden, können sich derartige Diffusionsverbindungen über die gesamte Kontaktfläche ausbilden. Für den Fall, dass (gerade im Hinblick auf das thermische Ausdehnungsverhalten solcher Wabenkörper) verhindert werden soll, dass eine vollständige Verbindung ausgebildet wird, kann auf den (glatten bzw. auf den strukturierten) Blechfolien eine Substanz vorgesehen sein, die die Ausbildung gerade von Diffusionsverbindungen unterbindet. Hierfür bieten sich beispielsweise spezielle Beschichtungen an, wie Titanoxid, Aluminiumoxid, etc.. Solche Passivierungsschichten können aber nicht nur zwischen den äußeren glatten Blechfolien sondern beispielsweise auch zwischen den glatten Blechfolien und dem Gehäuse angeordnet sein.

Außerdem hat die Wabenstruktur eine mittlere Ausdehnung senkrecht zum Verlauf der Kanäle die kleiner als 50 mm ist, insbesondere in einem Bereich von 20 mm bis 30 mm. Diese relativ kleinen Wabenstrukturen sind ein besonderes Einsatzgebiet für den lagenwetisen Aufbau mit zwei äußeren glatten Blechfolien. Ursache dafür ist unter anderem auch, dass diese relativ kurzen Lage bei der Herstellung schwer handhabbar sind, wenn eine äußere Blechfolie strukturiert ist Diese Lage muss zum Teil erheblich umgeformt werden, wobei die strukturierte Blechfolie unter Umständen mit sich selbst oder benachbart angeordneten verkeilen. Demnach ist gerade bei relativ kleinen Wabenstrukturen eine deutlich verbesserte, prozesssichere Auslegung des Heistellungsprozesses möglich.

Weiter hat die Lage eine Länge die kleiner als 500 mm beträgt, insbesondere in einem Bereich von 100 mm bis 300 mm liegt Die hier genannten Längen der Blechlagen unterscheiden sich erheblich von denen, die bereits bekannt waren. Dort ist ein Verhältnis von eingesetzten Länge der Lage zum Durchmesser des Trägers erheblich größer, so weist ein bekannter Wabenkörper mit einem Durchmesser von beispielsweise 10 cm eine Lagenlänge auf, die mindestens um den Faktor 20 größer ist Hier wird bevorzugt ein Verhältnis vorgeschlagen, das deutlich kleiner ist, insbesondere kleiner als 10 oder sogar keiner als 8.

Gemäß einer vorteilhaften Ausgestaltung der Wabenstruktur ist die Lage so zu dem Wabenkörper gewickelt und/oder gewunden angeordnet ist, dass zumindest in einem Teilabschnitt der Lage äußere glatte Blechfolien direkt benachbart zueinander angeordnet sind. Das bedeutet insbesondere, dass eine besonders starke Biegung beziehungsweise Schlingung der Lage vorliegt. Solche extremen Verlaufsformen, an denen die glatten Blechfolien aneinander selbst anliegend ausgebildet sind, treten insbesondere bei Wabenkörpern mit einer polygonalen äußeren Gestalt auf, also einer Gestalt, die von einer Zylinderform abweichend ist.

Gerade um auch die Eckbereiche dieser polygonalen äußeren Gestalt zu erreichen, müssen besonders stark gewundene Teilabschnitte vorliegen, die bis in diese Eckbereiche vordringen. Dabei sind insbesondere auch solche Verlaufsformen gemeint, bei denen die mindestens eine Lage mäanderförmig gebogen ist, also abwechselnd in eine und anschließend in eine andere (entgegengesetzte) Richtung (gegebenenfalls mit unterschiedlichen Krümmungsradien) gebogen ist. Aufgrund dieser extremen Verformungen bestand stets die Gefahr, dass sich die Blechfolien bekannter Wabenstrukturen nicht in einer gewünschten Weise ausbilden, gerade auch, weil die bekannten Blechfolienstapel bei der Auslegung einer Fertigung aufwendig zueinander positioniert und fügetechnisch verbunden werden mussten. Dieses technische Problem wird durch die Vorsehung äußerer glatter Blechfolien beseitigt.

Weiter wird vorgeschlagen, dass die Lage zwischen den äußeren glatten Blechfolien abwechseln eine weitere glatte Blechfolien und eine strukturierte Blechfolien angeordnet sind, wobei bevorzugt jeweils eine strukturierte Blechfolie zu den äußeren glatten Blechfolien benachbart angeordnet ist. Damit ist insbesondere eine Sandwich-Struktur gemeint, die durch zwei außen angeordnete, glatte Blechfolien und eine Mehrzahl innerer Blechfolien charakterisiert ist. Im Hinblick auf die inneren Blechfolien wird nun eine abwechselnde Anordnung von weiteren glatten und strukturierten Blechfolien vorgeschlagen. Diese innen angeordneten, glatten und strukturierten Blechfolien begrenzen zu beiden Seiten hin jeweils für das Abgas durchströmbare Kanäle. Dieser im wesentlichen symmetrische Aufbau mit abwechseln glatten und strukturierten Blechfolien gewährleistet die Herstellung definierter Verbindungen zwischen glatten und strukturierten Blechfolien nahe den Extrema der strukturierten Blechfolien, insbesondere der Wellenberge beziehungsweise Wellentäler.

Entsprechend einer weiteren Ausgestaltung der Wabenstruktur weisen die Blechfolien der Lagen jeweils zwei Enden auf, wobei mindestens 90 % dieser Enden mit dem Gehäuse wenigstens in einem Sektor verbunden sind, bevorzugt sind alle Enden mit dem Gehäuse verbunden. Aus diesem Sachverhalt ist insbesondere erkennbar, dass die Wabenstruktur eine, von einem spiraligen Aufbau abweichende Gestalt hat. Bei einer spiraligen Aufwicklung der Lagen sind üblicherweise die Hälfte aller Enden im Zentrum der Wabenstruktur angeordnet, während die gegenüberliegenden Enden der Lagen bzw. der Blechfolien am Gehäuse anliegen. Bei der hier beschriebenen, besonders bevorzugten Ausgestaltung der Wabenstruktur sind die Blechfolien beziehungsweise Blechlagen so angeordnet, dass diese sich ausgehend vom Gehäuse in einem inneren Bereich der Wabenstruktur hinein erstrecken und schließlich wieder mit dem gegenüberliegenden Ende an der Innenfläche des Gehäuses zum Anliegen kommen.

Die Tatsache, dass diese Enden zumindest in einem Sektor verbunden sind beziehungsweise in Kontakt stehen, trägt dem Sachverhalt Rechnung, dass beispielsweise das Gehäuse größer oder kleiner ausgeführt ist und somit nicht die gesamte Innenfläche des Gehäuses zwangsläufig mit den Blechfolien in Kontakt stehen muss. Es ist jedoch (beispielsweise bei einer S-förmigen Anordnung der Lagen) auch möglich, dass die Enden der Lagen nicht gleichmäßig über den Umfang des Gehäuses beziehungsweise der Wabenstruktur angeordnet sind, sondern dass Teilumfangsabschnitte existieren, in denen alle bzw. die Teil der Enden angeordnet sind, wobei sich dazwischen eine äußere glatte Blechfolie an der Innenseite des Gehäuses anschmiegt.

Der Verbund der Enden mit dem Gehäuse ist dabei bevorzugt fügetechnischer Natur, d.h. die Enden sind mit dem Gehäuse verlötet oder verschweißt. Der angegebene prozentuale Anteil der mit dem Gehäuse verbundenen Enden ist dabei insbesondere so zu verstehen, dass die nächstgrößere, ganzzahlige Anzahl von Enden mit dem Gehäuse verbunden ist. Ist die Wabenstruktur beispielsweise aus 2 Blechlagen gebildet (wie sie mit dem nachstehenden Verfahren hergestellt werden kann), die jeweils 2 glatte und 1 strukturierte Blechfolie umfassen, so weisen die Lagen insgesamt 12 Enden auf Die Angabe, dass mindestens 90 % dieser Enden mit dem Gehäuse verbunden sind, ist dabei so zu verstehen, dass wenigstens 11 dieser Enden mit dem Gehäuse verbunden sind (12 x 0,9 = 10,8 => nächstgrößere, ganzzahlige Anzahl von Enden beträgt 11).

Gemäß noch einer weiteren Ausgestaltung der Wabenstruktur ist zwischen dem Gehäuse und den Blechfolien wenigstens eine Manschette vorgesehen, wobei die Blechfolien der Lage jeweils zwei Enden aufweisen, wobei mindestens 90 % dieser Enden mit der wenigstens einen Manschette wenigstens in einer Zone verbunden sind, bevorzugt sind alle Enden mit der wenigstens einen Manschette verbunden. Grundsätzlich sei bezüglich der Erläuterungen im wesentlichen auf den vorstehenden Absatz verwiesen. Wesentlicher Unterschied bezüglich dieser beiden Ausgestaltungen ist, dass hier eine Manschette zwischen den Blechfolien und dem Gehäuse vorgesehen ist. Diese hat die Aufgabe, das unterschiedliche thermische Ausdehnungsverhalten der Blechfolien gegenüber dem Gehäuse zu kompensieren. Das Gehäuse, welches primär die strukturelle Integrität der Wabenstruktur gewährleisten soll, muss relativ stabil ausgeführt sein, wobei beispielsweise Gehäusewandstärken von 1 mm bis 3 mm eingesetzt werden. Im Gegensatz dazu werden die Blechfolien zur Realisierung einer geringen oberflächenspezifischen Wärmekapazität sowie zur Bereitstellung einer möglichst großen Oberfläche mit sehr dünnen Blechdicken eingesetzt, insbesondere mit einer Blechdicke kleiner 0,1 mm, bevorzugst sogar kleiner 0,03 mm. Aufgrund der unterschiedlichen oberflächenspezifischen Wärmekapazitäten würde eine starre Verbindung zwischen den Blechfolien und dem Gehäuse die Gefahr bergen, dass die Blechfolien einreißen oder Verbindungen gelöst werden. Um dies zu vermeiden, wird zwischen den Blechfolien und dem Gehäuse eine Manschette vorgesehen, die Relativbewegungen der Blechfolien gegenüber dem Gehäuse zulässt. Hinsichtlich der Gestaltung solcher Manschetten sei auch auf die WO 03/008774 verwiesen, auf deren Offenbarungsinhalt hier ebenfalls vollumfänglich Bezug genommen wird.

Gemäß einem weiteren Aspekt der Erfindung wird ein Verfahren zur Herstellung einer Wabenstruktur mit einer Vielzahl von im wesentlichen parallel zueinander angeordneten Kanälen vorgeschlagen, welche mindestens eine Lage von zumindest teilweise strukturierten Blechfolien sowie ein Gehäuse umfasst. Dabei sind zumindest folgende Schritte umfasst:
- Bilden mindestens einer Lage, indem pro Lage wenigstens eine zumindest teilweise strukturierte Blechfolie zwischen zwei äußeren glatten Blechlagen angeordnet wird,
- Winden der mindestens einen Lage, wobei die mindenstens eine Lage vor dem Winden auf eine bestimnte Länge geschmitten wird, wobei diese Länge kleiner als 500 mm beträgt und vor dem Trenn vorgang in einem Formwerkezeug zum winden positioniert wird,
- Einbringen der mindestens einen, gewundenen Lage in ein Gehäuse.

Das Bilden der mindestens einen Lage erfolgt dabei bevorzugt in der Weise, dass abwechselnd eine glatte Blechfolie, eine vollständig strukturierte Blechfolie und wiederum eine glatte Blechfolie aufeinander angeordnet werden. Es ist aber auch möglich, dass die beiden äußeren glatten Blechlagen miteinander verbunden sind beziehungsweise ein durchgehendes glattes Blechband vorgesehen wird, das beispielsweise eine U-förmige Hülle darstellt, wobei darin eine strukturierte Blechfolie angeordnet ist. Werden mehrere Lagen zum Aufbau der Wabenstruktur verwendet, so wird wiederum auf der äußeren glatten Blechfolie der einen Lage eine äußere glatte Blechfolie der angrenzenden Lage angeordnet, usw. Die mehreren Lagen können einen Stapel bilden, wobei dieser grundsätzlich wieder von glatten Blechfolien begrenzt ist. Grundsätzlich wird bezüglich der herstellbaren Wabenstruktur auf die obigen Ausführungen verwiesen, wobei hiermit auch solche mit einer Mehrzahl von Lagen, z. B. mit 2 bis 5 Lagen, hergestellt werden kann.

Unter dem Verfahrensschritt "Winden" wird ein Umbiegen, Umfalzen, Knicken und/oder Aufwickeln der mindestens einen Lage verstanden. Dabei weist die mindestens eine Lage anschließend eine äußere Form bzw. Mantelfläche auf, die im wesentlichen der Gestalt des Gehäuses entspricht. Vorzugsweise weist die gewundene Lage bzw. das gewundene Lagenpaket einen Querschnitt auf, der etwas größer ist, als der Querschnitt, den das Gehäuse einschließt. Damit wird eine Vorspannung realisiert, die sicherstellt, dass die Enden der Blechlagen bündig an der Innenfläche des Gehäuses anliegt. Der flächenbezogene Unterschied bzw. die Vorspannung beträgt dabei ungefähr die Größenordnung von 2 % bis 5 %.

Weiter wird vorgeschlagen, dass die mindestens eine Lage vor dem Winden auf eine bestimmte Länge geschnitten wird, wobei diese Länge kleiner als 500 mm beträgt, insbesondere in einem Bereich von 100 mm bis 300 mm liegt. Die hier vorgeschlagene Länge wird insbesondere bei Wabenkörpern mit einer kleinen Ausdehnung eingesetzt. Bevorzugt weisen dabei alle Lagen bzw. Blechlagen, die zur Herstellung der Wabenstruktur eingesetzt werden, die gleiche Länge auf

Weiterhin ist vorgegeben, dass die mindestens eine Lage vor dem Trennvorgang in einem Formwerkzeug zum Winden positioniert wird. D.h. mit anderen Worten, dass die Blechlage zunächst in das Formwerkzeug eingeführt und durch dieses fixiert bzw. gehalten wird Das hat den Vorteil, dass die mindestens eine Lage nach dem Trennvorgang nicht mehr transportiert werden muss, sondern sich bereits in der entsprechenden Position zur Durchführung des Windungs-Prozesses befindet. Dies hat wiederum eine deutliche Zeitersparnis im Hinblick auf die Fertigung sowie auch einen reduzierten Handhabungsaufwand zur Folge.

Schließlich wird die so gewundene Lage zumindest teilweise in ein Gehäuse eingebracht. Ein teilweises Einbringen der mindestens einen, gewundenen Lage eröffnet die Möglichkeit, die äußeren, freiliegenden Enden der mindestens einen

Gemäß einer weiteren Ausgestaltung des Verfahrens werden 2 bis 5 Lagen gebildet, die gemeinsam gewunden und in ein Gehäuse eingebracht werden.

Weiter wird auch vorgeschlagen, dass die mindestens eine Lage gemäß einer der nachstehenden Verlaufsformen gewunden wird: spiral-förmig, S-förmig, M-förmig, W-förmig, Z-förmig, U-förmig, V-förmig, mäander-förmig. Die einzelnen Verlaufsformen werden nachfolgend noch mit Bezug auf die Figuren näher erläutert Diese Verlaufsformen sind üblicherweise bei einer stirnseitigen Ansicht der Wabenstruktur, also in Richtung der Kanäle, erkennbar. Insbesondere zeigen die glatten Blechfolien eine solche Verlaufsform.

Gemäß noch einer weiteren Ausgestaltung des Verfahrens wird die mindestens eine Lage Blechfolien derart gebildet, dass zwischen den äußeren glatten Blechfolien abwechseln weitere glatte und strukturierte Blechfolien angeordnet sind, wobei bevorzugt jeweils eine strukturierte Blechfolie zu den äußeren glatten Blechfolien benachbart angeordnet wird. Bei einer solchen Anordnung der Blechfolien begrenzen die zwischen den äußeren glatten Blechfolien angeordneten Blechfolien beidseitig zumindest teilweise Kanäle, während die äußeren glatten Blechfolien nur hin zu einer Seite für ein Fluid durchströmbare Kanäle begrenzen. Die andere Seite der äußeren glatten Blechfolien wird zur Anlage an benachbarte glatte Blechfolien, eine Manschette oder das Gehäuse benötigt.

Bei einer besonders bevorzugten Ausgestaltung des Verfahrens erfolgt das Winden mit einem Formwerkzeug, welches mindestens zwei Formbacken und wenigstens einen Wickelstift hat, wobei die mindestens eine Lage dem Formwerkzeug so zugeführt wird, dass der mindestens eine Wickelstift vorzugsweise in etwa mittig zur mindestens einen Lage positioniert und, mit der mindestens einen Lage in Kontakt ist. Dann wird eine Rotation des mindestens einen Wickelstiftes durchgeführt, bis alle Enden der Blechfolien der mindestens einen Lage an zumindest einer Innenseite der Formbacken anliegen. Auf diese Weise lassen sich insbesondere S-förmige Verlaufsformen der Lagen schnell und prozesssicher erzeugen.

Dieser Verfahrensschritt wird nachfolgend mit Bezug auf die Figuren weiter erläutert. An dieser Stelle sei noch angemerkt, dass die Formbacken so gebildet sind, dass sie im wesentlichen eine äußere Form zumindest teilweise umschließen, die der letztendlichen äußeren Gestalt entspricht, welche die Blechlagen aufweisen, wenn sie in das Gehäuse eingesetzt werden sollen. Durch die etwa mittige Anordnung des Wickelstiftes wird bewirkt, dass bei einer Rotation gleichzeitig beide Enden der Lage verdreht werden, der Wickel- bzw. Windeprozess folglich schneller durchgeführt werden kann, als beispielsweise bei einer spiraligen Aufwicklung der Lagen, bei dem der Wickelstift nahe einem Ende der Lagen bzw. Blechfolien angeordnet ist.

Weiter wird vorgeschlagen, dass die mindestens eine Lage vor dem Winden auf eine bestimmte Länge geschnitten wird, wobei diese Länge kleiner als 500 mm beträgt, insbesondere in einem Bereich von 100 mm bis 300 mm liegt Die hier vorgeschlagene Länge wird insbesondere bei Wabenkörpern mit einer kleinen Ausdehnung eingesetzt. Bevorzugt weisen dabei alle Lagen bzw. Blechlagen, die zur Herstellung der Wabenstruktur eingesetzt werden, die gleiche Länge auf.

Gemäß einer weiteren Ausgestaltung des Verfahrens wird auch vorgeschlagen, dass vor dem Einbringen der mindestens einen gewundenen Lage in das Gehäuse um die mindestens eine Lage herum und/oder auf einer Innenfläche des Gehäuses wenigstens eine Manschette positioniert wird. Dabei erfolgt die Positionierung der Manschette bevorzugt so, dass sie im wesentlichen mittig zur axialen Erstreckung der Lage bzw. der Blechfolien angeordnet ist. Eine vorläufige Fixierung der Manschette am Umfang der gewundenen Lage beziehungsweise auf der Innenfläche des Gehäuses kann mittels Hilfsstoffen, wie Kleber etc., bewirkt werden.

Schließlich wird auch noch vorgeschlagen, dass nach dem Einfügen der mindestens einen Lage in das Gehäuse fügetechnische Verbindungen zwischen den Komponenten der Wabenstruktur ausgebildet werden, wobei diese bevorzugt zumindest in Teilbereichen miteinander verlötet werden. Für den Fall, dass eine Manschette zwischen der mindestens einen Lage und dem Gehäuse angeordnet ist, so weist diese Verbindungsabschnitte hin zum Gehäuse auf, die relativ klein sind, während sie bevorzugt über die gesamte Innenseite mit der mindestens einen Lage verlötet ist.

Die Erfindung sowie das Umfeld der Erfindung wird nun mit Bezug auf die Figuren näher erläutert. Dabei zeigen diese teilweise besonders bevorzugte Ausführungsbeispiele der Erfindung auf die diese jedoch nicht begrenzt ist. Es zeigen:
- Fig. 1: schematisch die Herstellung eines Ausführungsbeispiels eines Wabenkörpers;
- Fig. 2: einen Längsschnitt durch ein weiteres Ausführungsbeispiel der Wabenstruktur ;
- Fig. 3: ein Ausführungsbeispiel der Wabenstruktur in Frontansicht, wie sie mit dem erfindungsgemäßen Verfahren herstellbar ist;
- Fig. 4: schematisch den Aufbau bekannter Wabenstrukturen gemäß dem Stand der Technik und
- Fig. 5: schematisch verschiedene Verlaufsformen unterschiedlicher Ausführungsbeispiele der Wabenstruktur.

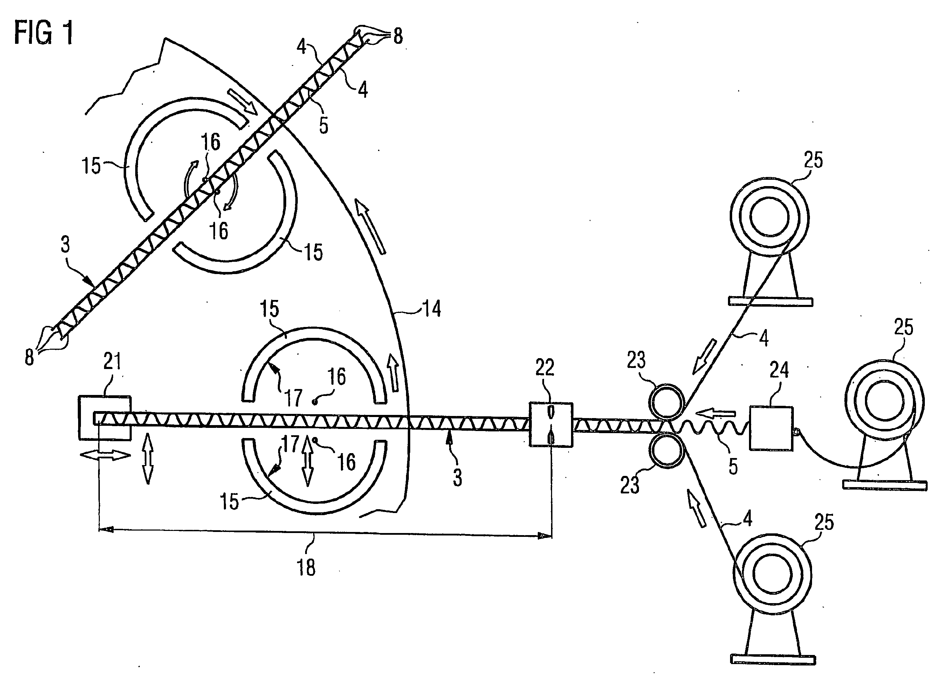

Figur 1 zeigt schematisch ein Verfahren zur Herstellung einer Wabenstruktur 1 (nicht dargestellt) mit einer Vielzahl von im wesentlichen parallel zueinander angeordneten Kanälen 2 umfassend mindestens eine Lage 3 von zumindest teilweise strukturierten Blechfolien 4, 5 sowie ein Gehäuse 6 (nicht dargestellt).

Wie rechts in Figur 1 zu erkennen ist, werden die Blechfolien 4, 5 von Spulen 25 abgewickelt, wobei eine Blechfolie 5 einer Strukturierungsvorrichtung 24 zugeführt wird. In der Strukturierungsvorrichtung 24 wird die Struktur der strukturierten Blechfolie 5 in das zunächst glatte Blechband eingebracht. Die glatten Blechfolien 4 von der oberen und unteren Spule 25 werden beidseitig zu der strukturierten Blechfolie 5 angeordnet, wobei die Bleche durch zwei Rollen 23 hindurchgeführt werden. Dieser Vorgang hat zur Folge, dass eine Lage 3 gebildet wird, die zwei äußere glatte Blechfolien 4 umfasst, zwischen denen wenigstens eine zumindest teilweise strukturierte Blechfolie 5 angeordnet ist. Die Rollen 23 bewirken dabei eine Vorschub der Blechfolien. 4, 5 hin zu einem Formwerkzeug 14. Im Hinblick auf die Zuführung der Blechfolien 4, 5 hin zum Formwerkzeug 14 wird bevorzugt, dass jede Blechfolie 4, 5, von einer separaten Spule 25 abgerollt und zwischen den Rollen 23 hindurchgeführt wird. Das heißt mit anderen Worten, dass bei der Herstellung einer Lage 3, welche eine Anzahl (x) strukturierte Blechfolien 5 und eine Anzahl (x+1) glatte Blechfolien 4 umfasst, insgesamt eine Anzahl (2x+1) Spulen 25 vorgesehen sind, die gleichzeitig und ggf. kontinuierlich die Blechfolien 4,5 dem Formwerkzeug 14 zuführen.

Das Formwerkzeug 14 weist eine Halterung 21 auf, welche die Blechlage 3 in Bezug auf das Formwerkzeug 14 ausrichtet. Dabei ist die Lage 3 so zu Wickelstiften 16 bzw. Formbacken 15 ausgerichtet, dass diese während eines einfachen Windungsprozesses anschließend gewunden werden können. Die Formbacken 15 sind hierbei geöffnet, und die Lage 3 erstreckt sich durch die Formbacken 15 hindurch.

Auf der der Halterung 21 gegenüberliegenden Seite der Formbacken 15 ist eine Trennvorrichtung 22 vorgesehen, die so positioniert ist, dass das Abtrennen der Blechfolien 4, 5 mit einer vorgegebenen Länge 18 erfolgen kann. Während des Trennvorgang werden die Wickelstifte 16 bevorzugt mit der Lage 3 in Kontakt gebracht, so dass ein weiterer Haltepunkt gebildet ist. Nach dem Durchtrennen der Blechfolien 3, 4 wird bei dem dargestellten Formwerkzeug 14, der eine Art Drehtisch hat, weiter verfahren, so dass die Zufuhr der gestapelten Blechfolien 4, 5 in eine nächste Halterung 21 beziehungsweise nächste Formbacken 15 vorgenommen werden kann.

In dem oben dargestellten Abschnitt des Formwerkzeugs 14 ist bereits eine abgetrennte Lage 3 dargestellt. Die Wickelstifte 16 sind nun in Kontakt mit den äußeren glatten Blechfolien 4. Wie mit den Pfeilen gekennzeichnet, wird die Lage 3 nun so verdreht, dass alle Enden 8 der Blechfolien 4, 5 an der Innenseite 17 der Formbacken 15 anliegen. Hierzu können die Formbacken 15 noch aufeinander zu bewegt werden, so dass diese letztendlich die Lage 3 vollständig umschließen. Die letztendlich gebogene Lage 3 wird anschließend aus den Formbacken 15 herausgenommen und in ein Gehäuse 6 (nicht dargestellt) integriert. Abschließend werden fügetechnische Verbindungen zwischen den Blechfolien 4, 5 beziehungsweise dem Gehäuse 6 ausgebildet, beispielsweise während eines Lötprozesses.

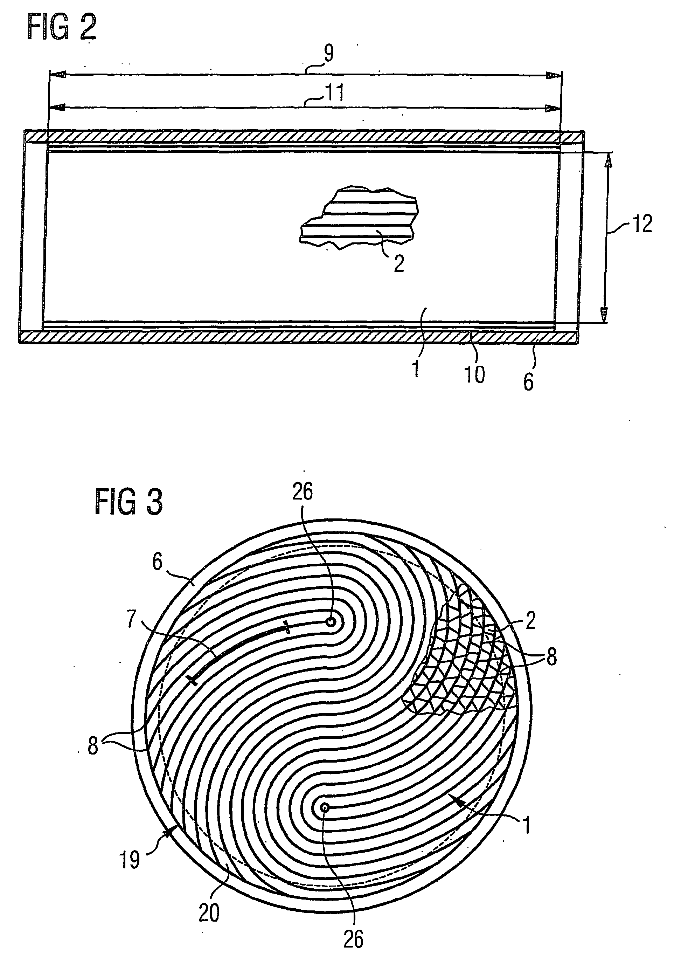

Figur 2 zeigt schematisch und in einem Längsschnitt ein Ausführungsbeispiel der Wabenstruktur mit einem Gehäuse 6. wobei die Blechfolien 4, 5 eine Vielzahl von im wesentlichen parallel zueinander angeordneten Kanälen 2 bilden. Zwischen den Blechfolien 4, 5 und dem Gehäuse 6 ist eine Manschette 10 angeordnet. Die Wabenstruktur 1 hat eine Ausdehnung 12. Das Gehäuse 6 überragt dabei stirnseitig die Blechfolien 4, 5. Die fügetechnischen Verbindungen sind dabei so ausgebildet, dass mindestens 90 % der Enden 8 (nicht dargestellt) der Blechfolien 4, 5 mit einer Zone 11 der Manschette 10 verbunden sind. Über diese Manschette 10 sind die Blechfolien 4, 5 mit einem Sektor 9 des Gehäuses mittelbar verbunden. Die Ausbildung fügetechnischer Verbindungen der Manschette 10 mit dem Gehäuse 9 erfolgt dabei in einem Flächenbereich, der kleiner als die Zone 11 ist

Figur 3 zeigt eine stirnseitige Ansicht eines weiteren Ausführungsbeispiels der Wabenstruktur 1. Die Wabenstruktur 1 hat eine Mehrzahl von Lagen 3 mit glatten und durchstrukturierten Blechfolien 4,5, welche Kanäle 2 bilden. Alle Blechfolien 4,5 liegen mit ihren Enden 8 an der Innenfläche 19 des Gehäuses 6 an. Die Lagen 3 sind dabei so zu einem Wabenkörper 1 gewunden, dass in einem Teilabschnitt 7 äußere glatte Blechfolien 4 direkt benachbart zueinander angeordnet sind. Dabei ist insbesondere ein S-förmiger Verlauf der Lagen 3 um zwei Wickelpunkte 26 gebildet. Nach dem Einfügen der Lagen 3 in das Gehäuse 6 werden fügetechnische Verbindungen zwischen den Komponenten der Wabenstruktur 1 ausgebildet, wobei diese hier in einem stirnseitigen, äußeren Teilbereich 20 vorgenommen sind.

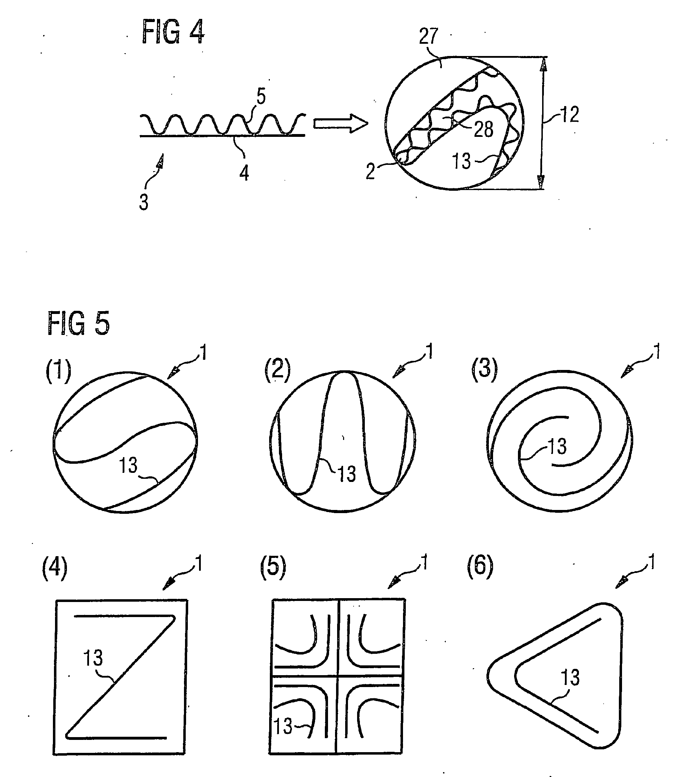

Figur 4 veranschaulicht schematisch, wie die Herstellung bekannter Wabenkörper gemäß dem Stand der Technik erfolgte. Dabei wurden abwechselnd glatte Blechfolien 4 und strukturierte Blechfolien 5 zu Lagen 3 zusammengeführt, wobei in jeder Lage 3 jeweils die gleiche Anzahl von glatten Blechfolien 4 und gewellten bzw. strukturierten Blechfolien 5 auftreten (Verhältnis von glatten zu strukturierten Blechfolien ist 1:1). Wie aus der rechten Darstellung erkennbar, hatte eine Umformung dieser Lagen 3 zur Folge, dass bei den daraus gebildeten Wabenkörpern 27 Kontaktbereiche 28 gebildet wurden, in denen strukturierte Blechfolienbereiche aneinander anlagen beziehungsweise direkt benachbart zueinander angeordnet sind. Dies trat insbesondere dann auf, wenn eine S-förmige Verlaufsform 13 gewählt wurde und die Ausdehnung 12 relativ klein war. Wie aus Figur 4 zu erkennen ist, hatte dies eine relativ unregelmässige Ausbildung von Kanälen 2 zur Folge, wobei die Effektivität eines solchen Wabenkörpers im Hinblick auf seinen späteren Einsatzzweck beeinträchtigt wurde. Dies wird durch die Wabenstruktur 1 vermieden.

Figur 5 zeigt schematisch beispielhaft einige Verlaufsformen 13 unterschiedlicher Wabenstrukturen 1 Entsprechend der aufsteigenden Nummerierung sind folgende Verlaufsformen 13 dargestellt: S-Form, W-Form, Spiral-Form, Z-Form., U-Form, V-Fonn,

Die hier vorgeschlagene Wabenstruktur lässt sich besonders einfach herstellen und weist eine hohe, gleichbleibende Effektivität während ihres späteren Einsatzes im Abgassystem mobiler Verbrennungskraftmaschinen auf. Insbesondere ist die Wabenstruktur dauerfest ausgelegt und gerade für extreme Umgebungsbedingungen, beispielsweise in unmittelbarer Nähe der Verbrennungskraftmaschine, geeignet.

### Bezugszeichenliste

- 1: Wabenstruktur
- 2: Kanal
- 3: Lage
- 4: Glatte Blechfolie
- 5: Strukturierte Blechfolie
- 6: Gehäuse
- 7: Teilabschnitt
- 8: Ende
- 9: Sektor
- 10: Manschette
- 11: Zone
- 12: Ausdehnung
- 13: Verlaufsform
- 14: Formwerkzeug
- 15: Formbacke
- 16: Wickelstift
- 17: Innenseite
- 18: Länge
- 19: Innenfläche
- 20: Teilbereich
- 21: Halterung
- 22: Trennvorrichtung
- 23: Rollen
- 24: Strukturierungsvorrichtung
- 25: Spule
- 26: Wickelpunkt
- 27: Wabenkörper
- 28: Kontaktbereich

## Patentansprüche

1. Verfahren zur Herstellung einer Wabenstruktur (1) mit einer Vielzahl von im wesentlichen parallel zueinander angeordneten Kanälen (2) umfassend mindestens eine Lage (3) von zumindest teilweise strukturierten Blechfolien (4,5) sowie ein Gehäuse (6), welches zumindest folgende Schritte umfasst:
- Bilden mindestens einer Lage (3), indem pro Lage (3) wenigstens eine zumindest teilweise strukturierte Blechfolie (5) zwischen zwei äußeren glatten Blechfolien (4) angeordnet wird,
- Winden der mindestens einen Lage (3),
- Einbringen der mindestens einen, gewundenen, Lage (3) in ein Gehäuse (6),
wobei die mindestens eine Lage (3) vor dem Trennvorgang in einem Formwerkzeug (14) zum Winden positioniert wird.

2. Verfahren nach Anspruch 1, bei dem 2 bis 5 Lagen (3) gebildet, gemeinsam gewunden und in ein Gehäuse (6) eingebracht werden.

3. Verfahren nach Anspruch 1 oder 2, bei dem die mindestens eine Lage (3) gemäß einer der nachstehenden Verlaufsformen (13) gewunden wird: Spiralförmig, S-förmig, M-förmig, W-förmig, Z-förmig, U-förmig, V-förmig, Mäander-förmig.

4. Verfahren nach einem der Ansprüche 1 bis 3, bei dem die mindestens eine Lage (3) derart gebildet wird, dass zwischen den äußeren glatten Blechfolien (4) abwechselnd weitere glatte und strukturierte Blechfolien (4,5) angeordnet sind, wobei bevorzugt jeweils eine strukturierte Blechfolie (5) zu den äußeren glatten Blechfolien (4) benachbart angeordnet wird.

5. Verfahren nach einem der Ansprüche 1 bis 4, bei dem das Winden mit einem Formwerkzeug (14) erfolgt, welches mindestens zwei Formbacken (15) und wenigstens einen Wickelstift (16) hat, wobei die mindestens eine Lage (3) dem Formwerkzeug (14) so zugeführt wird, dass der mindestens eine Wickelstift (16), vorzugsweise in etwa mittig zur mindestens einen Lage (3) positioniert und, mit der mindestens einen Lage (3) in Kontakt ist, und dann eine Rotation des mindestens einen Wickelstiftes (16) durchgeführt wird, bis alle Enden (8) der Blechfolien (4,5) der mindestens einen Lage (3) an zumindest einer Innenseite (17) der Formbacken (15) anliegen.

6. Verfahren nach einem der Ansprüche 1 bis 5, bei dem die mindestens eine Lage (3) vor dem Winden auf eine bestimmte Länge (18) geschnitten wird, wobei diese Länge (18) kleiner als 500 mm beträgt, insbesondere in einem Bereich von 100 mm bis 300 mm liegt.

7. Verfahren nach einem der Ansprüche 1 bis 6, bei dem vor dem Einbringen der mindestens einen gewundenen Lage (3) in das Gehäuse (6) um die mindestens eine Lage (3) herum und/oder auf einer Innenfläche (19) des Gehäuses (6) wenigstens eine Manschette (10) positioniert wird.

8. Verfahren nach einem der Ansprüche 1 bis 7, bei dem nach dem Einfügen der mindestens einen Lage (3) in das Gehäuse (6) fügetechnische Verbindungen zwischen den Komponenten (3,4,5,6,10) der Wabenstruktur (1) ausgebildet werden, wobei diese bevorzugt zumindest in Teilbereichen (20) miteinander verlötet werden.

## Claims

1. A process for producing a honeycomb structure (1) with a multiplicity of passages (2) disposed substantially parallel to one another, comprising at least one layer (3) of at least partially structured sheet metal foils (4, 5) and a housing (6), the process comprising at least the following steps:
- forming at least one layer (3) having at least one at least partially structured sheet metal foil (5) disposed between two outer smooth sheet metal foils (4),
- winding of the at least one layer (3)
- introducing the at least one, wound, layer (3) in a housing (6),
wherein, before cutting, the at least one layer (3) is positioned in a shaping tool (14) for winding.

2. Process as claimed in claim 1, wherein 2 to 5 layers (3) are used in forming, winding and introducing steps.

3. Process as claimed in one of claims 1 or 2, wherein the at least one layer (3) is wound to form a profile (13) selected from the group consisting of helical, S-shaped, M-shaped, W-shaped, Z-shaped, U-shaped, V-shaped, and meandering.

4. Process as claimed in one of claims 1 to 3, wherein the at least one layer (3) is formed by placing further smooth and structured sheet metal foils (4, 5) alternately between the outer smooth sheet metal foils (4) wherein preferably in each case a structured sheet metal foil (5) is disposed adjacent to the outer smooth sheet metal foils (4).

5. Process as claimed in one of claims 1 to 4, wherein the winding step is carried out by using a shaping tool (14) that comprises at least two shaping jaws (15) and at least one winding pin (16), wherein the at least one layer (3) is being fed to the shaping tool (14) so that the at least one winding pin (16) is in contact with the at least one layer (3), and preferably positioned approximately centrally relative to the at least one layer (3), and then a rotation of the at least one winding pin (16) is carried out until all ends (8) of the sheet metal foils (4, 5) of the at least one layer (3) bear against at least one inner surface (17) of the shaping jaws (15).

6. Process as claimed in one of claims 1 to 5, wherein the at least one layer (3) is being cut to a defined length (18) before the winding step wherein the length (18) is smaller than 500 mm and in particular between 100 mm and 300 mm.

7. Process as claimed in one of claims 1 to 6, wherein at least one sleeve (10) is positioned around the at least one layer (3) and/or on an inner surface (19) of the housing (6) prior to the introduction of the at least one layer (3) into the housing (6).

8. The process as claimed in one of claims 1 to 7, wherein after the step of introducing the at least one layer (3) into the housing (6) connections by technical joining are formed between the components (3, 4, 5, 6, 10) of the honeycomb structure (1), wherein preferably these components (3, 4, 5, 6, 10) are brazed at least in sub regions (20).

## Revendications

1. Procédé de fabrication d'une structure en nids d'abeilles (1) avec une multiplicité de canaux (2) agencés sensiblement de façon parallèle les uns par rapport aux autres, comportant au moins une couche (3) de feuilles de tôle (4, 5) au moins partiellement structurées, ainsi qu'un boîtier (6), procédé comportant au moins les étapes suivantes :
- Formation d'au moins une couche (3) en agençant par couche (3) au moins une feuille de tôle (5) au moins partiellement structurée entre deux feuilles de tôle extérieures lisses (4),
- entrelacement de l'au moins une couche (3),
- introduction de l'au moins une couche (3) entrelacée dans un boîtier (6),
dans lequel avant le processus de coupe l'au moins une couche (3) est positionnée dans un outil de formage (14) pour être entrelacée.

2. Procédé selon la revendication 1, dans lequel 2 à 5 couches (3) sont formées, sont entrelacées communément et introduites dans un boîtier (6).

3. Procédé selon la revendication 1 ou 2, dans lequel l'au moins une couche (3) est entrelacée selon l'une des formes évolutives (13) : en forme de spirale, en forme de S, de M, de W, de Z, de U, de V, en forme de méandre.

4. Procédé selon l'une des revendications 1 à 3, dans lequel l'au moins une couche (3) est formée de manière telle, qu'entre les feuilles de tôle extérieures lisses (4) d'autres feuilles de tôle lisses et structurées (4, 5) sont agencées en alternance, une feuille de tôle structurée (5) étant respectivement agencée de manière adjacente par rapport aux feuilles de tôle extérieures lisses (4).

5. Procédé selon l'une des revendications 1 à 4, dans lequel l'entrelacement est effectué avec un outil de formage (14), qui a au moins deux joues de façonnage (15) et au moins une tige d'enroulement (16), l'au moins une couche (3) étant alimentée de manière telle à l'outil de formage (14), que l'au moins une tige d'enroulement (16) est positionnée de préférence environ au centre par rapport à l'au moins une couche (3) et est en contact avec l'au moins une couche (3) et qu'alors une rotation de l'au moins une tige d'enroulement (16) est effectuée jusqu'à ce que toutes les extrémités (8) des feuilles de tôle (4, 5) de l'au moins une couche (3) s'appliquent contre au moins une surface intérieure (17) des joues de façonnage (15).

6. Procédé selon l'une des revendications 1 à 5, dans lequel l'au moins une couche (3) est coupée jusqu'à une longueur donnée (18), cette longueur (18) comportant moins que 500 mm, se trouvant notamment dans une gamme de 100 mm à 300 mm.

7. Procédé selon l'une des revendications 1 à 6, dans lequel avant d'introduire l'au moins une couche entrelacée (3) dans le boîtier (6) au moins une manchette (10) est positionnée autour de l'au moins une couche (3) et/ou sur une surface intérieure (19) du boîtier (6).

8. Procédé selon l'une des revendications 1 à 7, dans lequel après l'introduction de l'au moins une couche (3) dans le boîtier (6) des liaisons par technique de jointoiement sont réalisées entre les composants (3, 4, 5, 6, 10) de la structure en nids d'abeilles (1), les composants (3, 4, 5, 6, 10) étant de préférence brasés les uns aux autres dans au moins des régions partielles (20).
